# EUROPEAN PATENT APPLICATION

(11) **EP 4 803 395 A1**
(43) Date of publication of application: **09.09.2026**
(21) Application number: 26156029.6
(22) Date of filing: 03.02.2026
(51) Int. Cl.: B60W 50/00, B60W 50/14, B60K 28/06

(54) **METHOD OF CONTROLLING ACCESS TO VEHICLE SYSTEMS, SYSTEM FOR IMPLEMENTING, AND VEHICLE**

(30) Priority: 05.03.2025 US 202519071668
(71) Applicant: Toyota Jidosha Kabushiki Kaisha, Toyota-shi, Aichi-ken 471-8571 (JP)
(72) Inventor: NAGAKARI, Takahiro, Tokyo, 103-0022 (JP)
(74) Representative: D Young & Co LLP

(57) **Abstract**

An aspect of this description relates to a method of controlling access to a vehicle system. The method includes detecting a status of an operator of a vehicle using at least one sensor. The method further includes determining whether the operator of the vehicle is actively operating the vehicle in a normal manner. The method further includes restricting access for all software applications of a first type to the vehicle system in response to a determination that the operator is operating the vehicle in an abnormal manner.

## Description

### BACKGROUND

During operation of a vehicle, software applications operating on a vehicle system access elements of the vehicle system using application programming interfaces (APIs). An API allows a software application to communicate with the vehicle system even in situations where the software application is developed by a third party, other than the vehicle manufacturer. The communication between the software application and the vehicle system often results in the vehicle system collecting and/or processing information based on instructions received from the software application. This collecting and/or processing consumes resources of the vehicle system.

### SUMMARY

An aspect of this description relates to a method of controlling access to a vehicle system. The method includes detecting a status of an operator of a vehicle using at least one sensor. The method further includes determining whether the operator of the vehicle is actively operating the vehicle in a normal manner. The method further includes restricting access for all software applications of a first type to the vehicle system in response to a determination that the operator is operating the vehicle in an abnormal manner.

An aspect of this description relates to a system for controlling access to a vehicle system. The system includes a non-transitory computer readable medium configured to store instructions thereon. The system further includes a processor connected to the non-transitory computer readable medium. The processor is configured to execute the instructions for detecting a status of an operator of a vehicle using at least one sensor. The processor is configured to execute the instructions for determining whether the operator of the vehicle is actively operating the vehicle in a normal manner. The processor is configured to execute the instructions for restricting access for all software applications of a first type to the vehicle system in response to a determination that the operator is operating the vehicle in an abnormal manner.

An aspect of this description relates to a vehicle. The vehicle includes at least one sensor mounted to the vehicle. The vehicle further includes a non-transitory computer readable medium configured to store instructions thereon. The vehicle further includes a processor connected to the non-transitory computer readable medium and the at least one sensor. The processor is configured to execute the instructions for detecting a status of an operator of a vehicle using at least one sensor. The processor is configured to execute the instructions for determining whether the operator of the vehicle is actively operating the vehicle in a normal manner. The processor is configured to execute the instructions for restricting access for all software applications of a first type to the vehicle system in response to a determination that the operator is operating the vehicle in an abnormal manner.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Figure 1 is a perspective view of a vehicle including a vehicle system, in accordance with some embodiments.
Figure 2 is a flowchart of a method of controlling access to a vehicle system, in accordance with some embodiments.
Figure 3 is a flowchart of stages of a method of control for a vehicle system, in accordance with some embodiments.
Figure 4 is a block diagram of a system for controlling access to a vehicle system, in accordance with some embodiments.

### DETAILED DESCRIPTION

The following disclosure provides many different embodiments, or examples, for implementing different features of the provided subject matter. Specific examples of components, values, operations, materials, arrangements, or the like, are described below to simplify the present disclosure. These are, of course, merely examples and are not intended to be limiting. Other components, values, operations, materials, arrangements, or the like, are contemplated. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above" "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

During operation of a vehicle, numerous software applications, also called applications, are executed by a vehicle system. The execution of the software applications includes collecting and processing data by the vehicle system. Various types of software applications are executed by the vehicle system including infotainment, communications, notifications, vehicle operations, or other suitable types of software applications. During execution of the software application, processing capacity of the vehicle system is consumed. During movement of the vehicle, sharing of processing load by the vehicle system with other systems, such as a cloud based system, is reduced. Thus, the vehicle system processing capability is occasionally limited to only the hardware mounted within the vehicle. Due to the finite processing capacity, execution of certain software applications is prioritized in some instances. In some instances, the prioritization of the processing causes vehicle operations applications, such as advanced driver assistance systems (ADAS), to have a lower priority than other applications for a brief duration. During periods of time where an operator, also called a driver, is actively controlling the vehicle, lower priority for ADAS features is compensated for by the operator control of the vehicle. In contrast, in situations where the operator is not actively controlling the vehicle, such as due to an incident with a health of the operator or sleeping by the operator, lower priority for the ADAS features increases a risk of collision by the vehicle.

In order to help address situations where the operator is sleeping, disabled or incapacitated, the current application provides a method and system for limiting the ability of software applications from accessing the vehicle system during such situations. The method includes monitoring a status of the operator and determining whether the operator is capable of normal operation of the vehicle. In response to a determination that the operator is incapable of normal operation of the vehicle, the method reduces the ability of certain types of software applications to access the vehicle systems in order to maximize the amount of processing capacity available to the ADAS features in order to help reduce a risk of collision by the vehicle. The access of the software applications to the vehicle system is controllable using the application programming interface (API) which the vehicle system is able to control in order to prevent applications from sending instructions to the vehicle system during periods where the operator is not capable of normal vehicle operation.

In some embodiments, different types of software applications are denied access at different stages of the method. Denying access of different types of software applications at different stages of the method helps to maintained a feeling of comfort for passengers in the vehicle for as long as possible while also effectively reducing a risk of vehicle collision. For example, in some embodiments, communication applications are denied access to the vehicle system later in the method than infotainment applications. Controlling of these different types of software applications in different manners is achievable by having different APIs for different types of software applications and controlling the various APIs on an individual basis.

In some embodiments, the method also includes the vehicle system using the ADAS features in order to bring the vehicle to a stop. In some embodiments, the method further includes the vehicle system using the ADAS features to maneuver the vehicle to a safe location, such as a shoulder of a roadway. By limiting access to other types of software applications during the ADAS control of the vehicle when the operator is not capable of normal operation, a larger amount of processing capacity of the vehicle system is available for the ADAS features in order to help improve precision of the ADAS features controlling movement of the vehicle.

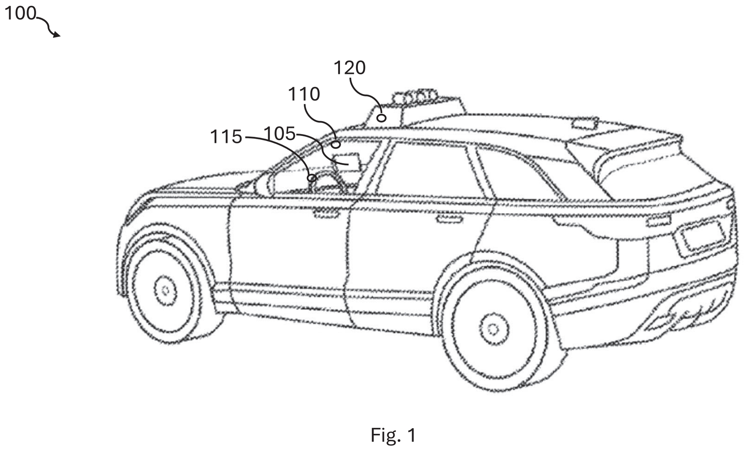

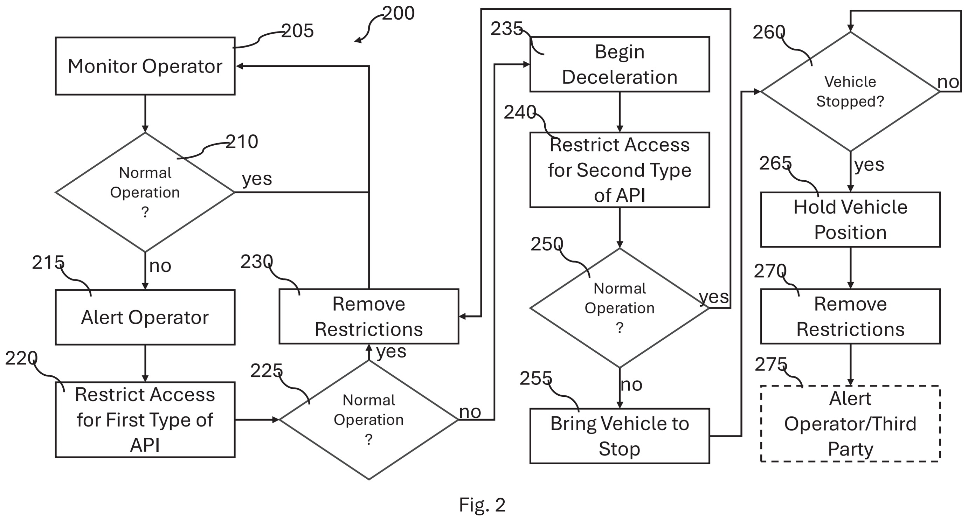

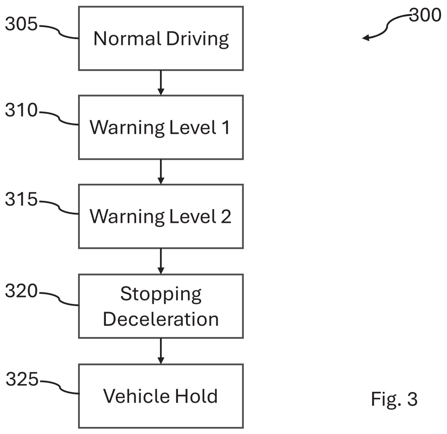

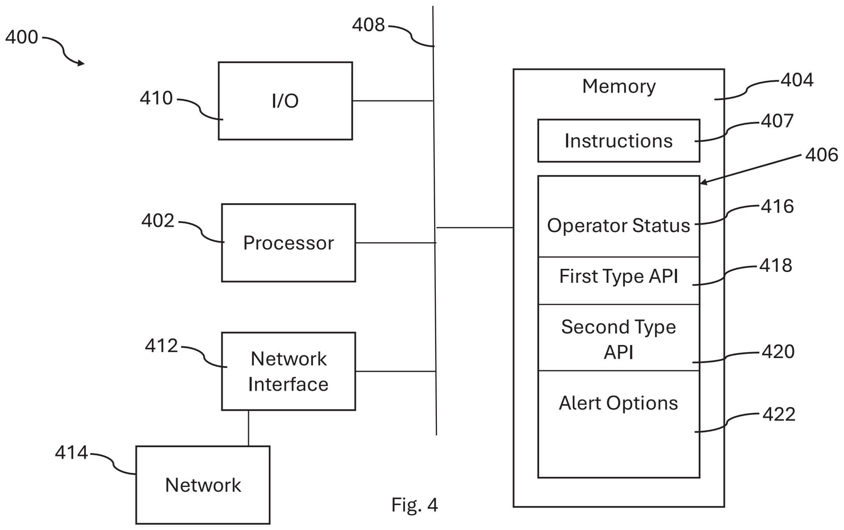

Figure 1 is a perspective view of a vehicle 100, in accordance with some embodiments. The vehicle 100 is capable of implementing the method 200 (Figure 2) or method 300 (Figure 3). In some embodiments, the vehicle 100 is capable of implementing the method 200 (Figure 2) or the method 300 (Figure 3) using a system 400 (Figure 4) mounted in the vehicle. In some embodiments, the vehicle 100 is able to implement the method 200 (Figure 2) or the method 300 (Figure 3) based on receiving instructions from the system 400 (Figure 4) remote or separable from the vehicle 100. In some embodiments where the system 400 (Figure 4) is remote or separable from the vehicle 100, the vehicle 100 is configured to receive instructions for implementing the method 200 (Figure 2) or the method 300 (Figure 3) either wirelessly or via a wired connection.

The vehicle 100 includes an infotainment display 105. The vehicle further includes an optical sensor 110. The vehicle further includes a touch sensor 115. The vehicle further includes an external sensor 120. The vehicle 100 further includes a vehicle system, e.g., system 400 (Figure 4), configured to collect data from one or more of the optical sensor 110, the touch sensor 115 or the external sensor 120. The vehicle system is further capable of generating content for display on the infotainment display 105.

The infotainment display 105 is configured to display information viewable by occupants of the vehicle 100 including the operator of the vehicle 100. The content of the infotainment display 105 is controllable by the vehicle system. In some embodiments, the infotainment display 105 is controlled to display notifications to the operator of the vehicle in response to a determination that the vehicle is being operated abnormally. In some embodiments, the infotainment display 105 is capable of outputting audio signals as well as visual signals. In some embodiments, the infotainment display 105 is configured to display content from software applications executed by the vehicle system. In some embodiments, the infotainment display 105 includes a touchscreen. In some embodiments, the infotainment display 105 is configured to receive audio input using a microphone, input from one or more buttons or other suitable input devices.

The optical sensor 110 is configured to detect at least a portion of an interior of the vehicle 100. The portion of the interior of the vehicle includes a driver's seat of the vehicle 100. The optical sensor 110 is configured to capture information indicating a status of the operator of the vehicle. In some embodiments, the optical sensor 110 includes a camera, an infrared (IR) detector, or other suitable optical detectors. In some embodiments, the optical sensor 110 is configured to capture information, such as an image, of one or more eye of the operator of the vehicle. In some embodiments, the optical sensor 110 is further configured to capture information related to an environment external to the vehicle 100. In some embodiments, the information related to the environment external to the vehicle 100 includes relative location of lane markers, road signs, sidewalls, traffic lights, other vehicle or other suitable external elements. In some embodiments, multiple optical sensors 110 are mounted in the vehicle.

The touch sensor 115 is configured to determine whether the operator of the vehicle 100 is contacting a steering wheel of the vehicle 100. In some embodiments, the touch sensor 115 includes a capacitive touch sensor or other suitable touch sensor. In some embodiments, multiple touch sensors 115 are mounted on the steering wheel.

The external sensor 115 is configured to detect at least a portion of the external environment of the vehicle 100. The external sensor 120 is configured to capture information indicating a relative position between the vehicle and objects in the environment external to the vehicle. In some embodiments, the external sensor 120 includes a camera, an IR detector, a light detection and ranging (LIDAR) detector, or other suitable detectors. In some embodiments, the information related to the environment external to the vehicle 100 includes relative location of lane markers, road signs, sidewalls, traffic lights, other vehicles or other suitable external elements. In some embodiments, multiple external sensors 120 are mounted on the vehicle.

The vehicle 100 further includes an ADAS system controllable by the vehicle system, e.g. system 400 (Figure 4). In some embodiments, the ADAS system includes features such as adaptive cruise control (ACC), lane tracing assist (LTA), lane change assist (LCA), highway navigation pilot (HNP), urban navigation pilot (UNP), or other suitable ADAS features. One of ordinary skill in the art would understand that one or more of the ADAS features include an ability to control a speed of the vehicle 100 as well as a steering of the vehicle 100. In some embodiments, the ADAS system is capable of control ranging from ADAS Level 1 control to ADAS Level 5 control.

The vehicle system, e.g., system 400 (Figure 4) is configured to receive information from the various sensors in the vehicle 100 in order to implement the method 200 (Figure 2) or the method 300 (Figure 3). The vehicle system is configured to use this information to control access to the processing capabilities of the vehicle system. The vehicle system is further configured to control ADAS features of the vehicle 100 based on a determined status of the operator of the vehicle 100.

One of ordinary skill in the art would recognize that different sizes of vehicles having different controls and features are within the scope of this description. For example, in some embodiments, the vehicle 100 does not include an infotainment display 105; or the vehicle 100 includes a heads up display (HUD).

Figure 2 is a flowchart of a method 200 of controlling access to a vehicle system in accordance with some embodiments. In some embodiments, the method 200 is implemented for controlling access to the vehicle system of the vehicle 100 (Figure 1). In some embodiments, the method 200 is implemented for controlling access to a vehicle system other than the vehicle 100 (Figure 1). In some embodiments, the method 200 is implemented by the vehicle system of the vehicle 100 (Figure 1). In some embodiments, the method 200 is implemented by a system remote from the vehicle 100 (Figure 1) and instructions are sent to the vehicle system of the vehicle 100 based on execution of the method 200. In some embodiments, the method 200 is implemented in conjunction with the method 300 (Figure 3).

In operation 205, the operator of the vehicle is monitored. In some embodiments, the operator is monitored based on captured visual imagery of the operator, such as by optical sensor 110 (Figure 1). In some embodiments, the operator is monitored based on whether the operator is in contact with the steering wheel of the vehicle, such as by touch sensor 115 (Figure 1). In some embodiments, the operator is monitored based on information indicating movement of the vehicle relative to objects in the environment outside the vehicle, such as by the optical sensor 110 (Figure 1) and/or the external sensor 120 (Figure 1). In some embodiments, the operator is monitored using a combination of visual imagery of the operator, contact with the steering wheel, information indicating movement of the vehicle relative to objects or other suitable parameters.

A system, e.g. system 400 (Figure 4), such as a vehicle system of the vehicle 100 (Figure 1) or a remote system, receives information used for monitoring the operator. The system analyzes the received information to determine a status of the operator. In some embodiments, the system determines whether eye(s) of the operator are closed for a duration greater than a threshold time period, i.e., to determine whether the operator is asleep. In some embodiments, the system determines whether the operator has not contacted the steering wheel of the vehicle for a duration greater than a threshold touch time period, i.e., to determine whether the operator is actively engaged in operation of the vehicle. In some embodiments, the system determines whether relative movement between the vehicle and objects in the environment external to the vehicle are outside of a predetermined tolerance for a duration greater than a threshold movement time period. In some embodiments, a magnitude of the threshold movement time period is adjusted based on a speed of the vehicle. That is, the higher the vehicle speed, the lower the magnitude of the threshold movement time period. Monitoring relative movement between the vehicle and the objects external to the vehicle is usable to determine whether the vehicle is moving erratically indicating lack of active operation of the vehicle by the operator.

In operation 210 a determination is made regarding whether the operation of the vehicle is normal. The determination is made based on one or more comparisons between the received information and thresholds in order to determine whether the operator is actively operating the vehicle. In response to a determination that the vehicle is being operated normally, the method 200 returns to operation 205. In response to a determination that the vehicle is being operated abnormally, the method 200 proceeds to operation 215.

In operation 215, an alert is generated to notify the operator of the abnormal operation of the vehicle. In some embodiments, the alert includes a display in the vehicle, such as by the infotainment display 105 (Figure 1). In some embodiments, the alert includes an auditory alert, e.g., output by a speaker in the vehicle. In some embodiments, the alert includes a tactile alert in a seat of the operator, the steering wheel, or another suitable location within the vehicle. In some embodiments, the alert includes transmitting a signal to a mobile device accessible by the operator for causing the mobile device to generate a visual and/or audible notification. In some embodiments, the alert includes a combination of the notification options discussed above or other suitable alerts.

In operation 220, access to the vehicle system of the vehicle is restricted for a first type of API. That is, an API useable for allowing software applications of a first type to access the vehicle system is controlled to inhibit the software application of the first type from accessing the vehicle system. In some embodiments, an input-output (IO) port of the first type of API is disabled by the vehicle system. In some embodiments, the first type of software applications includes infotainment applications, such as movies, music, games or other types of infotainment. In some embodiments, the first type of software applications includes navigation applications. In some embodiments, the first type of software applications includes all software applications other than communication, operator detection, vehicle performance detection, ADAS, and notification applications. In some instances, maintaining an ability for occupants of the vehicle to communicate using the vehicle system allows the operator or another occupant of the vehicle to communicate with a third party, such as emergency services, in order to convey information regarding a status of the vehicle or a status of the operator.

The restriction of access by the software applications of the first type helps to avoid consumption of processing capacity of the vehicle system by software applications that are primarily used for entertainment or convenance of the occupants of the vehicle. This allows the vehicle system to devote a higher portion of the processing capability to software applications related to control of the vehicle and communication between the vehicle system and selected eternal entities, such as emergency services.

In operation 225 a determination is made regarding whether the operation of the vehicle is normal. In some embodiments, the operation 225 is performed after lapse of a notification duration following the operation 215 to factor in reaction time by the operator following the notification. In some embodiments, a magnitude of the notification duration decreases as a speed of the vehicle increases. In some embodiments, the notification duration ranges from about 3 seconds to about 10 seconds. The determination is made based on one or more comparisons between the received information and thresholds in order to determine whether the operator is actively operating the vehicle. In response to a determination that the vehicle is being operated normally, the method 200 proceeds to operation 230 then to operation 205. In response to a determination that the vehicle is being operated abnormally, the method 200 proceeds to operation 235.

In operation 230, the restrictions that limit access to the vehicle system using the first type of API are removed. That is, access to the vehicle system is returned to a normal operating status for the vehicle. In some embodiments, a signal is sent to the IO portion of the first type of API to enable communication between the vehicle system and the applications of the first type. Following the operation 230, the method 200 returns to the operation 205 and monitoring of the operator continues.

In operation 235, the vehicle system accesses the ADAS features in order to begin deceleration of the vehicle. Deceleration of the vehicle helps to increase a time for the vehicle to travel to a location where a collision by the vehicle would occur. Deceleration of the vehicle also reduces a change in momentum of occupants of the vehicle in the event that a collision occurs.

In operation 240, access to the vehicle system of the vehicle is restricted for a second type of API. That is, an API useable for allowing software applications of a second type to access the vehicle system is controlled to inhibit the software application of the second type from accessing the vehicle system. In some embodiments, an IO port of the second type of API is disabled by the vehicle system. In some embodiments, the second type of software applications includes communication, operator detection or notification applications. In some embodiments, the second type of software applications includes all software applications other than vehicle performance detection and ADAS applications.

Following the operation 240, access for software applications of both the first type and the second type is restricted. The restriction of access by the software applications of the second type helps to avoid consumption of processing capacity of the vehicle system by software applications that are not used for controlling operation of the vehicle. This allows the vehicle system to devote a higher portion of the processing capability to software applications related to control of the vehicle in order to use the ADAS system to reduce a risk of collision by the vehicle.

In operation 250 a determination is made regarding whether the operation of the vehicle is normal. In some embodiments, the operation 250 is performed after lapse of a deceleration duration following the operation 235 to factor in reaction time by the operator following the initiation of the deceleration. In some embodiments, a magnitude of the deceleration duration decreases as a speed of the vehicle increases. In some embodiments, the notification duration ranges from about 1 second to about 3 seconds. The determination is made based on one or more comparisons between the received information and thresholds received prior to completion of operation 240 in order to determine whether the operator is actively operating the vehicle. In response to a determination that the vehicle is being operated normally, the method 200 proceeds to operation 230 then to operation 205. In response to a determination that the vehicle is being operated abnormally, the method 200 proceeds to operation 255.

In operation 255, the vehicle system uses the ADAS features to bring the vehicle to a stop. In some embodiments, the vehicle system further uses the ADAS features in order to maneuver the vehicle to a location where a collision is less likely, such as a shoulder of a roadway, a lane closest to a side of the roadway, or another suitable location.

In operation 260, a determination is made regarding whether the vehicle is stopped. The determination is made based on vehicle performance information indicating that a speed of the vehicle is zero. In response to a determination that the vehicle is not stopped the method 200 continues to execute the operation 260 until the vehicle is stopped. In response to a determination that the vehicle is stopped, the method 200 proceeds to operation 265.

In operation 265, the vehicle is held at the location where the vehicle stopped. In some embodiments, the vehicle is held at the location where the vehicle stopped by the vehicle system placing the vehicle transmission in park. In some embodiments, the vehicle is held at the location where the vehicle stopped by the vehicle system engaging a parking brake or another brake of the vehicle. In some embodiments, the vehicle system maintains the vehicle in the hold position until a preset operation of the vehicle is performed by an occupant of the vehicle, such as an interaction with a brake pedal, an interaction with an infotainment display, or other suitable action detected by the vehicle system.

In operation 270, the restrictions that limit access to the vehicle system using the second type of API are removed. In some embodiments, the restrictions that limit the access of the vehicle system using the first type of API is also removed by operation 270. In some embodiments, a signal is sent to the IO portion of the second type of API, and optionally the first type of API, to enable communication between the vehicle system and the software applications. Removing of the restrictions in the operation 270 restores an ability of the operator and other occupants of the vehicle to communicate with third parties, such as emergency services, regarding a status of the vehicle or the operator.

In operation 275, an additional alert is provided to the operator and/or a third party. In some embodiments, the alert to the operator is implemented using one or more of the alert options described above with respect to operation 215. In some embodiments, the alert to the operator uses a same process as the alert in operation 215. In some embodiments, the alert to the operator uses a different process from the alert in operation 215. In some embodiments, a content of the alert in operation 215 is different from a content of the alert in operation 240. In some embodiments, the alert in operation 240 also includes an alert to a third party. In some embodiments, the third party includes emergency services, a designated contact point determined in advance by the operator, or another suitable third party. In some embodiments, the operation 275 is omitted.

In some embodiments, in response to a detection of a suitable action by the vehicle system to remove the vehicle from the hold position, normal operation of the vehicle is restored.

One of ordinary skill in the art would understand that modifications to the method 200 are within the scope of this description. In some embodiments, the method 200 includes at least one additional operation. For example, in some embodiments, the method 200 further includes activation of safety features of the vehicle, such as hazard lights or a horn of the vehicle, during operation 255. In some embodiments, at least one of the operations of the method 200 is omitted. For example, in some embodiments, the operation 275 is omitted. In some embodiments, an order of operations of the method 200 is changed. For example, in some embodiments, the operation 250 is performed prior to the operation 240.

Figure 3 is a flowchart of stages of a method 300 of control for a vehicle system, in accordance with some embodiments. In some embodiments, the method 300 is implemented for controlling access to the vehicle system of the vehicle 100 (Figure 1). In some embodiments, the method 300 is implemented for controlling access to a vehicle system other than the vehicle 100 (Figure 1). In some embodiments, the method 300 is implemented by the vehicle system of the vehicle 100 (Figure 1). In some embodiments, the method 300 is implemented by a system remote from the vehicle 100 (Figure 1) and instructions are sent to the vehicle system of the vehicle 100 based on execution of the method 300. In some embodiments, the method 300 is implemented in conjunction with the method 200 (Figure 2).

In operation 305, the vehicle is operated in normal driving status. The normal driving status is implemented in response to a determination that the operator is actively engaged in operating the vehicle. In normal driving status, all authorized software applications are able to access the vehicle system using a corresponding API. Examples of operations of the method 200 (Figure 2) that occur during normal driving status include operations 205, 210 and 215 (Figure 2).

In operation 310, the vehicle is operated in a warning level 1 status. The warning level 1 status is implemented in response to a determination that the operator has ceased to actively engage in operating the vehicle for a first time period. In the warning level 1 status, the software applications of the first type are restricted from accessing the vehicle system to avoid consumption of processing capacity of the vehicle system by software applications that are primarily used for entertainment or convenance of the occupants of the vehicle. This allows the vehicle system to devote a higher portion of the processing capability to software applications related to control of the vehicle and communication between the vehicle system and selected eternal entities, such as emergency services. Examples of operations of the method 200 (Figure 2) that occur during warning level 1 status include operations 220 and 225 (Figure 2).

In operation 315, the vehicle is operated in a warning level 2 status. The warning level 2 status is implemented in response to a determination that the operator has ceased to actively engage in operating the vehicle for a second time period, longer than the first time period. In the warning level 2 status, access for software applications of both the first type and the second type is restricted. The restriction of access by the software applications of the second type helps to avoid consumption of processing capacity of the vehicle system by software applications that are not used for controlling operation of the vehicle. This allows the vehicle system to devote a higher portion of the processing capability to software applications related to control of the vehicle in order to use the ADAS system to reduce a risk of collision by the vehicle. Examples of operations of the method 200 (Figure 2) that occur during the warning level 2 status include operations 235, 240 and 250 (Figure 2).

In operation 320, the vehicle is operated in a stopping deceleration status. The stopping deceleration status is implemented in response to a determination that the operator has ceased to actively engage in operating the vehicle for a third time period, longer than the second time period. In the stopping deceleration status, only applications directed to control of the vehicle and detection of the vehicle performance are permitted to access the vehicle system. Limiting access to the vehicle system to only software applications for controlling the vehicle and monitoring vehicle performance helps to maximize processing capacity for controlling the vehicle to reduce the risk of collision by the vehicle. Examples of operations of the method 200 (Figure 2) that occur during normal driving status include operations 255 and 260 (Figure 2).

In operation 325, the vehicle is operated in a vehicle hold status. The vehicle hold status is implemented in response to a vehicle stopping following operation 320. In the vehicle hold status, the vehicle is maintained in a stopped condition and access to the vehicle system is restored for all authorized software applications. Examples of operations of the method 200 (Figure 2) that occur during normal driving status include operations 265, 270 and 275 (Figure 2).

Figure 4 is a block view of a system 400 for controlling access to a vehicle system in accordance with one or more embodiments. System 400 includes a hardware processor 402 and a non-transitory, computer readable storage medium 404 encoded with, i.e., storing, the computer program code 406, i.e., a set of executable instructions. Computer readable storage medium 404 is also encoded with instructions 407 for interfacing with manufacturing machines for producing the memory array. The processor 402 is electrically coupled to the computer readable storage medium 404 via a bus 408. The processor 402 is also electrically coupled to an input/output (I/O) interface 410 by bus 408. A network interface 412 is also electrically connected to the processor 402 via bus 408. Network interface 412 is connected to a network 414, so that processor 402 and computer readable storage medium 404 are capable of connecting to external elements via network 414. The processor 402 is configured to execute the computer program code 406 encoded in the computer readable storage medium 404 in order to cause system 400 to be usable for performing a portion or all of the operations as described in method 200 (Figure 2), method 300 (Figure 3) or implemented by the vehicle 100 (Figure 1).

In some embodiments, the processor 402 is a central processing unit (CPU), a multi-processor, a distributed processing system, an application specific integrated circuit (ASIC), and/or a suitable processing unit.

In some embodiments, the computer readable storage medium 404 is an electronic, magnetic, optical, electromagnetic, infrared, and/or a semiconductor system (or apparatus or device). For example, the computer readable storage medium 504 includes a semiconductor or solid-state memory, a magnetic tape, a removable computer diskette, a random access memory (RAM), a read-only memory (ROM), a rigid magnetic disk, and/or an optical disk. In some embodiments using optical disks, the computer readable storage medium 504 includes a compact disk-read only memory (CD-ROM), a compact disk-read/write (CD-R/W), and/or a digital video disc (DVD).

In some embodiments, the storage medium 404 stores the computer program code 404 configured to cause system 400 to perform a portion or all of the operations as described in method 200 (Figure 2), method 300 (Figure 3) or implemented by the vehicle 100 (Figure 1). In some embodiments, the storage medium 404 also stores information used for performing a portion or all of the operations as described in method 200 (Figure 2), method 300 (Figure 3) or implemented by the vehicle 100 (Figure 1) as well as information generated during performing a portion or all of the operations as described in method 200 (Figure 2), method 300 (Figure 3) or implemented by the vehicle 100 (Figure 1), such as an operator status data parameter 416, a first type API parameter 418, a second type API parameter 420, an alert options parameter 422, and/or a set of executable instructions to perform the operation of a portion or all of the operations as described in method 200 (Figure 2), method 300 (Figure 3) or implemented by the vehicle 100 (Figure 1).

In some embodiments, the storage medium 404 stores instructions 407 for interfacing with external devices, e.g., mobile devices. The instructions 407 enable processor 402 to generate or receive instructions readable by the external devices during implementation of a portion or all of the operations as described in method 200 (Figure 2), method 300 (Figure 3) or implemented by the vehicle 100 (Figure 1).

System 400 includes I/O interface 410. I/O interface 410 is coupled to external circuitry. In some embodiments, I/O interface 410 includes a keyboard, keypad, mouse, trackball, trackpad, touch screen and/or cursor direction keys for communicating information and commands to processor 402.

System 400 also includes network interface 412 coupled to the processor 402. Network interface 412 allows system 400 to communicate with network 414, to which one or more other computer systems are connected. Network interface 412 includes wireless network interfaces such as BLUETOOTH, WIFI, WIMAX, GPRS, or WCDMA; or wired network interface such as ETHERNET, USB, or IEEE-1394. In some embodiments, a portion or all of the operations as described in method 200 (Figure 2), method 300 (Figure 3) or implemented by the vehicle 100 (Figure 1) is implemented in two or more systems 400, and information such as operator status, first type API, second type API, or alert options are exchanged between different systems 400 via network 414.

### Supplemental Note 1

An aspect of this description relates to a method of controlling access to a vehicle system. The method includes detecting a status of an operator of a vehicle using at least one sensor. The method further includes determining whether the operator of the vehicle is actively operating the vehicle in a normal manner. The method further includes restricting access for all software applications of a first type to the vehicle system in response to a determination that the operator is operating the vehicle in an abnormal manner.

### Supplemental Note 2

The method of Supplemental Note 1, further including transmitting an alert in response to the determination that the operator is operating the vehicle in the abnormal manner.

### Supplemental Note 3

The method of Supplemental Note 1 or 2, further including determining whether the operator of the vehicle is actively operating the vehicle in the normal manner after transmitting the alert.

### Supplemental Note 4

The method of any of Supplemental Notes 1-3, further including controlling an advanced driver assistance system (ADAS) using the vehicle system to decelerate the vehicle in response to a determination that the operator continues to operate the vehicle in the abnormal manner after transmitting the alert.

### Supplemental Note 5

The method of any of Supplemental Notes 1-4, further including restricting access for all software applications of a second type to the vehicle system in response to a determination that the operator is operating the vehicle in the abnormal manner after transmitting the alert.

### Supplemental Note 6

The method of any of Supplemental Notes 1-5, further including determining whether the operator of the vehicle is actively operating the vehicle in the normal manner after controlling the ADAS to decelerate the vehicle.

### Supplemental Note 7

The method of any of Supplemental Notes 1-6, further including controlling the ADAS using the vehicle system to bring the vehicle to a stop in response to a determination that the operator continues to operate the vehicle in the abnormal manner after controlling the ADAS to decelerate the vehicle.

### Supplemental Note 8

An aspect of this description relates to a system for controlling access to a vehicle system. The system includes a non-transitory computer readable medium configured to store instructions thereon. The system further includes a processor connected to the non-transitory computer readable medium. The processor is configured to execute the instructions for detecting a status of an operator of a vehicle using at least one sensor. The processor is configured to execute the instructions for determining whether the operator of the vehicle is actively operating the vehicle in a normal manner. The processor is configured to execute the instructions for restricting access for all software applications of a first type to the vehicle system in response to a determination that the operator is operating the vehicle in an abnormal manner.

### Supplemental Note 9

The system of Supplemental Note 8, wherein the processor is further configured to execute the instructions for transmitting an alert in response to the determination that the operator is operating the vehicle in the abnormal manner.

### Supplemental Note 10

The system of Supplemental Note 8 or 9, wherein the processor is further configured to execute the instructions for determining whether the operator of the vehicle is actively operating the vehicle in the normal manner after transmitting the alert.

### Supplemental Note 11

The system of any of Supplemental Notes 8-10, wherein the processor is further configured to execute the instructions for controlling an advanced driver assistance system (ADAS) using the vehicle system to decelerate the vehicle in response to a determination that the operator continues to operate the vehicle in the abnormal manner after transmitting the alert.

### Supplemental Note 12

The system of any of Supplemental Notes 8-11, wherein the processor is further configured to execute the instructions for restricting access for all software applications of a second type to the vehicle system in response to a determination that the operator is operating the vehicle in the abnormal manner after transmitting the alert.

### Supplemental Note 13

The system of any of Supplemental Notes 8-12, wherein the processor is further configured to execute the instructions for determining whether the operator of the vehicle is actively operating the vehicle in the normal manner after controlling the ADAS to decelerate the vehicle.

### Supplemental Note 14

The system of any of Supplemental Notes 8-13, wherein the processor is further configured to execute the instructions for controlling the ADAS using the vehicle system to bring the vehicle to a stop in response to a determination that the operator continues to operate the vehicle in the abnormal manner after controlling the ADAS to decelerate the vehicle.

### Supplemental Note 15

An aspect of this description relates to a vehicle. The vehicle includes at least one sensor mounted to the vehicle. The vehicle further includes a non-transitory computer readable medium configured to store instructions thereon. The vehicle further includes a processor connected to the non-transitory computer readable medium and the at least one sensor. The processor is configured to execute the instructions for detecting a status of an operator of a vehicle using at least one sensor. The processor is configured to execute the instructions for determining whether the operator of the vehicle is actively operating the vehicle in a normal manner. The processor is configured to execute the instructions for restricting access for all software applications of a first type to the vehicle system in response to a determination that the operator is operating the vehicle in an abnormal manner.

### Supplemental Note 16

The vehicle of Supplemental Note 15, wherein the processor is further configured to execute the instructions for transmitting an alert in response to the determination that the operator is operating the vehicle in the abnormal manner.

### Supplemental Note 17

The vehicle of Supplemental Note 15 or 16, wherein the processor is further configured to execute the instructions for determining whether the operator of the vehicle is actively operating the vehicle in the normal manner after transmitting the alert.

### Supplemental Note 18

The vehicle of any of Supplemental Notes 15-17, wherein the processor is further configured to execute the instructions for controlling an advanced driver assistance system (ADAS) using the vehicle system to decelerate the vehicle in response to a determination that the operator continues to operate the vehicle in the abnormal manner after transmitting the alert. The processor is further configured to execute the instructions for restricting access for all software applications of a second type to the vehicle system in response to a determination that the operator is operating the vehicle in the abnormal manner after transmitting the alert.

### Supplemental Note 19

The vehicle of any of Supplemental Notes 15-18, wherein the processor is further configured to execute the instructions for determining whether the operator of the vehicle is actively operating the vehicle in the normal manner after controlling the ADAS to decelerate the vehicle.

### Supplemental Note 20

The vehicle of any of Supplemental Notes 15-19, wherein the processor is further configured to execute the instructions for controlling the ADAS using the vehicle system to bring the vehicle to a stop in response to a determination that the operator continues to operate the vehicle in the abnormal manner after controlling the ADAS to decelerate the vehicle.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

## Claims

1. A method of controlling access to a vehicle system, the method comprising:
detecting a status of an operator of a vehicle using at least one sensor;
determining whether the operator of the vehicle is actively operating the vehicle in a normal manner; and
restricting access for all software applications of a first type to the vehicle system in response to a determination that the operator is operating the vehicle in an abnormal manner.

2. The method of claim 1, further comprising:
transmitting an alert in response to the determination that the operator is operating the vehicle in the abnormal manner.

3. The method of claim 2, further comprising:
determining whether the operator of the vehicle is actively operating the vehicle in the normal manner after transmitting the alert.

4. The method of claim 3, further comprising:
controlling an advanced driver assistance system (ADAS) using the vehicle system to decelerate the vehicle in response to a determination that the operator continues to operate the vehicle in the abnormal manner after transmitting the alert.

5. The method of claim 3, further comprising:
restricting access for all software applications of a second type to the vehicle system in response to a determination that the operator is operating the vehicle in the abnormal manner after transmitting the alert.

6. The method of claim 4, further comprising:
determining whether the operator of the vehicle is actively operating the vehicle in the normal manner after controlling the ADAS to decelerate the vehicle.

7. The method of claim 6, further comprising:
controlling the ADAS using the vehicle system to bring the vehicle to a stop in response to a determination that the operator continues to operate the vehicle in the abnormal manner after controlling the ADAS to decelerate the vehicle.

8. A system for controlling access to a vehicle system, the system comprising:
a non-transitory computer readable medium configured to store instructions thereon; and
a processor connected to the non-transitory computer readable medium, wherein the processor is configured to execute the instructions for:
detecting a status of an operator of a vehicle using at least one sensor;
determining whether the operator of the vehicle is actively operating the vehicle in a normal manner; and
restricting access for all software applications of a first type to the vehicle system in response to a determination that the operator is operating the vehicle in an abnormal manner.

9. The system of claim 8, wherein the processor is further configured to execute the instructions for:
transmitting an alert in response to the determination that the operator is operating the vehicle in the abnormal manner.

10. The system of claim 9, wherein the processor is further configured to execute the instructions for:
determining whether the operator of the vehicle is actively operating the vehicle in the normal manner after transmitting the alert.

11. The system of claim 10, wherein the processor is further configured to execute the instructions for:
controlling an advanced driver assistance system (ADAS) using the vehicle system to decelerate the vehicle in response to a determination that the operator continues to operate the vehicle in the abnormal manner after transmitting the alert.

12. The system of claim 10, wherein the processor is further configured to execute the instructions for:
restricting access for all software applications of a second type to the vehicle system in response to a determination that the operator is operating the vehicle in the abnormal manner after transmitting the alert.

13. The system of claim 11, wherein the processor is further configured to execute the instructions for:
determining whether the operator of the vehicle is actively operating the vehicle in the normal manner after controlling the ADAS to decelerate the vehicle.

14. The system of claim 13, wherein the processor is further configured to execute the instructions for:
controlling the ADAS using the vehicle system to bring the vehicle to a stop in response to a determination that the operator continues to operate the vehicle in the abnormal manner after controlling the ADAS to decelerate the vehicle.

15. A vehicle comprising:
at least one sensor mounted to the vehicle
a non-transitory computer readable medium configured to store instructions thereon; and
a processor connected to the non-transitory computer readable medium and the at least one sensor, wherein the processor is configured to execute the instructions for:
detecting a status of an operator of a vehicle using information from the at least one sensor;
determining whether the operator of the vehicle is actively operating the vehicle in a normal manner; and
restricting access for all software applications of a first type to the vehicle system in response to a determination that the operator is operating the vehicle in an abnormal manner.
